**Europäisches Patentamt**

**European Patent Office**

**Office européen des brevets**

(11) Veröffentlichungsnummer: **0 370 224**
**A2**

# (12) EUROPÄISCHE PATENTANMELDUNG

(21) Anmeldenummer: 89119112.4

(22) Anmeldetag: 14.10.89

(51) Int. Cl.⁵: **H01H 3/14, B60N 2/44**

(30) Priorität: **19.11.88 DE 3839134**

(43) Veröffentlichungstag der Anmeldung:
**30.05.90 Patentblatt 90/22**

(84) Benannte Vertragsstaaten:
**AT BE CH DE ES FR GB IT LI NL SE**

(71) Anmelder: **Rumpel, Arthur**
**Bachstrasse 26**
**D-4720 Beckum(DE)**

(72) Erfinder: **Rumpel, Arthur**
**Bachstrasse 26**
**D-4720 Beckum(DE)**

(74) Vertreter: **Habbel, Hans-Georg, Dipl.-Ing.**
**Postfach 3429 Am Kanonengraben 11**
**D-4400 Münster(DE)**

(54) **Kontaktmatte für Fahrzeugsitze.**

(57) Die Erfindung bezieht sich auf eine Kontaktmatte, beispielsweise für Fahrzeugsitze, und schlägt zwei elektrisch leitende, im Abstand voneinander durch eine Polsterschicht gehaltene Folien vor, die Kontaktnieten tragen, wobei im Bereich der Kontaktnieten in der eigentlichen Polsterschicht Durchbrechungen vorgesehen sind, so daß bei einem Zusammenpressen der Polsterschicht die elektrisch leitenden Folien über die Kontaktnieten miteinander in elektrisch leitenden Kontakt gelangen.

EP 0 370 224 A2

## Kontaktmatte für Fahrzeugsitze

Die Erfindung bezieht sich auf eine Kontaktmatte für Fahrzeugsitze gemäß dem Oberbegriff des Patentanspruches.

Aus zahlreichen Kontroll- oder Sicherheitsgründen ist es häufig wünschenswert, in einem Fahrzeugsitz eine Kontaktmatte anzuordnen, die bei Benutzung des Sitzes bestimmte Kontakte auslöst und damit Schaltvorgänge einleiten kann.

Aus der gattungsbildenden US-PS 34 87 451 ist eine solche Kontaktmatte bekannt, bei welcher als elektrisch leitende Schichten durchbrochene Metallschichten eingesetzt werden, und zwar vorzugsweise aus Aluminium oder anderem Drahtnetz. Die Kontaktgabe zwischen den beiden Schichten erfolgt durch metallische Ösen. Versuche mit einem solchen Drahtnetz haben aber gezeigt, daß ein Drahtnetz nicht lange Zeit reaktionsfähig bleibt, sondern sich bei längerer Belastung bleibend verbiegt und damit zu Fehlschaltungen führt. Da ein Drahtnetz eingesetzt wird, das also luftdurchlässig ist, kommt dem Einsatz der in dieser gattungsbildenden US-PS 34 87 451 beschriebenen Ösen keine besondere Bedeutung zu.

Aus der DE-22 45 376 B2 ist ein Sitzschalter bekanntgeworden, bei welchem auf einem elastischen elektrisch isolierenden Material, z. B. Polyester, gabelartige Leiteranordnungen aufgeschichtet sind, die aus einer Kupferfolie bestehen und Vorsprünge zur Kontaktgabe aufweisen. Diese gabelartigen Leiteranordnungen, d.h. diese dünnen Metallstreifen, können durch einfache Messerstiche kaum sichtbar zerstört werden, so daß nach außen hin nicht erkennbar ist, daß dieser Sitzschalter nicht mehr funktionsfähig ist.

Der Erfindung liegt die Aufgabe zugrunde, die gattungsbildende Kontaktmatte so zu verbessern, daß sie bei hoher Ansprechempfindlichkeit eine lange Lebensdauer bei einwandfreier Schaltqualität aufweist.

Diese der Erfindung zugrundeliegende Aufgabe wird durch die Lehre des Hauptanspruches gelöst.

Durch die Verwendung von kupferbeschichteten Kunststoffolien als elektrisch leitende Folien wird eine hohe Leitfähigkeit mit großer Flexibilität dieser Folien verbunden. Durch den Einsatz von Rohrnieten als Kontaktnieten wird erreicht, daß zumindest im Bereich der Kontaktstellen die Folie "atmen" kann und somit die zwischen den Folien angeordnete Polsterschicht in der Lage ist, die Kontaktstellen wieder auseinanderzutreiben.

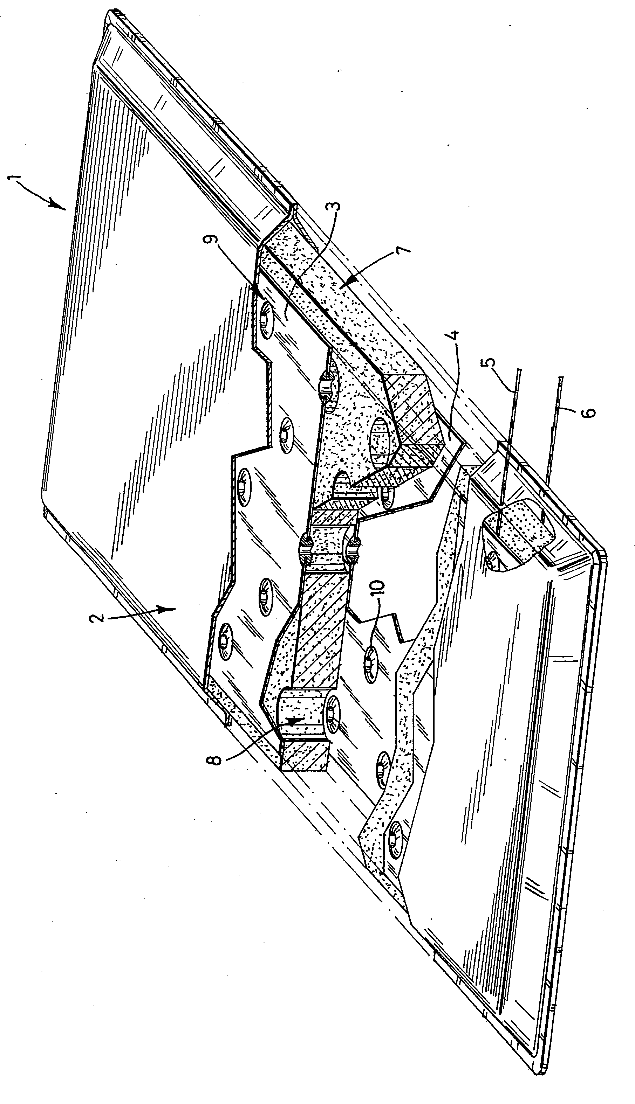

Ein Ausführungsbeispiel der Erfindung wird nachfolgend anhand der Zeichnung erläutert.

In der Zeichnung ist allgemein mit 1 eine Kontaktmatte bezeichnet, die aus einem Schutzbezug 2 besteht, der elektrisch nicht leitfähig ist und in dem die eigentlichen elektrischen Bauteile der Kontaktmatte angeordnet sind. Der Schutzbezug 2 kann dabei hinsichtlich farblicher Gestaltungen beliebig gewählt werden. Innerhalb der Kontaktmatte 1 ist eine Polsterschicht 7 vorgesehen, die bei dem dargestellten Ausführungsbeispiel aus einer Schaumstoffmatte besteht, in der Durchbrechungen 8 vorgesehen sind. Die Polsterschicht 7 wird beiderseits durch elektrisch leitende Folien 3 und 4 abgedeckt, die bei dem zu beschreibenden Ausführungsbeispiel aus kupferbeschichteten Kunststoffolien bestehen. In bzw. an diesen elektrisch leitenden Folien 3, 4 sind Kontaktnieten 9 und 10 angeordnet, die als Rohrnieten ausgebildet sind, d.h. eine Belüftung der zwischen den beiden elektrisch leitenden Folien 3, 4 eingeschlossenen Polsterschicht 7 ermöglichen.

Die Kontaktnieten 9 und 10 sind dabei jeweils fluchtend mit den Durchbrechungen 8 in der Polsterschicht 7 an den elektrisch leitenden Folien 3 und 4 angeordnet, so daß bei einem Zusammenpressen der Polsterschicht 7 die einander gegenüberliegenden Kontaktnieten 9 bzw. 10 elektrischh leitend in Kontakt kommen.

Die elektrisch leitenden Folien 3 und 4 stehen jeweils mit einem Stromleiter 5 bzw. 6 in Verbindung, der an die elektrisch leitenden Folien 3 und 4 angelötet sein kann.

Aus der voraufgehenden Beschreibung ist erkennbar, daß bei einer Druckbelastung der Kontaktmatte 1, beispielsweise durch eine aufsitzende Person, die Polsterschicht 7 zusammengepreßt wird und wenigstens auf einem Teil dieser Polsterschicht 7 die elektrisch leitenden Folien 3 und 4 über die Kontaktnieten 9 und 10 miteinander in eine elektrisch leitende Verbindung gebracht werden. Hierdurch kann ein entsprechender Schaltimpuls ausgelöst werden.

Da die elektrisch leitende Verbindung zwischen den einzelnen Kontaktnieten nicht über Kabel od. dgl. erfolgt, sondern über die elektrisch leitenden Folien 3 und 4, stört eine teilweise Beschädigung einer oder beider elektrisch leitenden Folien 3, 4 die elektrische Kontaktgebung bei Benutzung der Kontaktmatte 1 nicht.

## Ansprüche

Kontaktmatte für Fahrzeugsitze mit
a) einer elektrisch nicht leitfähigen, eine hohe Rückstellkraft aufweisenden, elastisch zusammenpreßbaren Polsterschicht (7),
b) in der Polsterschicht (7) vorgesehenen, diese durchquerenden und im Abstand voneinander angeordneten Durchbrechungen (8),

c) die Polsterschicht (7) im wesentlichen abdeckenden und auf beiden Seiten vorgesehenen, elektrisch leitfähigen Schichten, an die je ein Stromleiter (5, 6) anschließt,

d) an den Schichten jeweils im Bereich der Durchbrechungen (8) der Polsterschicht (7) angeordneten und mit den Schichten fest und elektrisch leitend verbundenen Kontaktnieten (9, 10) und

e) einem die Polsterschicht (7) sowie die leitenden Schichten aufnehmenden elektrisch nicht leitfähigen Schutzbezug (2),

dadurch gekennzeichnet, daß die leitenden Schichten als kupferbeschichtete Kunststoffolien und die Kontaktnieten (9, 10) als Rohrnieten ausgebildet sind.